# EUROPEAN PATENT APPLICATION

(11) **EP 3 817 374 A1**
(43) Date of publication of application: **05.05.2021**
(21) Application number: 19926907.7
(22) Date of filing: 30.04.2019
(51) Int. Cl.: H04N 7/18

(54) **METHOD, APPARATUS AND SYSTEM FOR ADJUSTING FIELD OF VIEW OF OBSERVATION, AND STORAGE MEDIUM AND MOBILE APPARATUS**

(71) Applicant: SZ DJI Technology Co., Ltd., Shenzhen, Guangdong 518057 (CN)
(72) Inventor: FENG, Xuyang, Shenzhen, Guangdong 518057 (CN); ZHANG, Liliang, Shenzhen, Guangdong 518057 (CN); XIA, Zhiqiang, Shenzhen, Guangdong 518057 (CN)
(74) Representative: Appelt, Christian W.
(86) International application number: PCT/CN2019/085261
(87) International publication number: WO 2020/220289

(57) **Abstract**

The embodiments of the present invention provide a method, a device and a system for adjusting a field of observation, a storage medium, and a mobile device. The method is used for an autonomous driving system of a mobile device, and includes: obtaining motion information of the mobile device and an initial observation image (102), cropping the initial observation image with a current field of view to obtain an image under the current field of view (104), determining a target field of view based on the motion information of the mobile device and the image under the current field of view (106), and adjusting the field of observation to the target field of view (108). To a certain extent, the technical solutions provided by the embodiments of the present invention can solve the safety problem and the limited application problem existing in a process of target observation.

## Description

### TECHNICAL FIELD

The present invention relates to the technical field of intelligent transportation, and in particular, to a method, a device, a system, a storage medium, and a mobile device for adjusting a field of observation.

### BACKGROUND

The target detection technology in autonomous driving or unmanned driving is related to whether an obstacle in a direction of travel of a vehicle can be accurately detected, which directly affects the safety of driving a vehicle, and becomes a key technical issue in this field.

In a specific application, traditional target detection technologies based on visual images are difficult to efficiently and accurately perform a detection task that involves both near targets and distant targets. For example, when performing target detection on a distant object, a camera in a vehicle imaging system generally has an angle of view of its lens reduced directly under the circumstances that the image resolution remains the same, so that an image of the distant object can be obtained; In addition, the distant object can still be imaged with more pixels, which facilitates further target detection and analysis of this vehicle. However, adopting the above strategy to carry out target detection will sacrifice a part of field of view, targets in the sacrificed field of view cannot be collected by the vehicle imaging system, and the targets that the imaging system fails to collect probably are obstacles near the vehicle. Therefore, to a certain extent, performing the target detection by means of adjusting the field of view of a lens alone may cause potential safety risks during the driving of the vehicle.

To maintain a relatively wide field of view while identifying distant target objects, it is necessary to increase the computation burden and algorithm complexity of an autonomous driving system. This has high requirements on the hardware and software of the autonomous driving system; thus, it is difficult to widely apply such a strategy in target detection in actual products.

### SUMMARY

The embodiments of the present invention provide a method, a device and a system for adjusting a field of observation, a storage medium, and a mobile device, to solve the safety problem and the limited application problem existing in the process of target observation.

In a first aspect, embodiments of the present invention provide a method for adjusting a field of observation, which is used for an autonomous driving system of a mobile device, including:
obtaining motion information of the mobile device and an initial observation image;
cropping the initial observation image with a current field of view to obtain an image under current field of view;
determining a target field of view based on the motion information of the mobile device and the image under the current field of view;
adjusting the field of observation to the target field of view.

In a second aspect, embodiments of the present invention provide a device for adjusting a field of observation, which is used for an autonomous driving system of a mobile device, including:
a memory;
a processor; and
a computer program;
where, the computer program is stored in the memory and configured to be executed by the processor to implement the method as described in the first aspect.

In a third aspect, embodiments of the present invention provide a system for adjusting a field of observation, including:
an image collecting device to collect an initial observation image;
a device for adjusting a field of observation, to execute the method as described in the first aspect.

In a fourth aspect, embodiments of the present invention provide a computer-readable storage medium, on which a computer program is stored,
the computer program is executed by a processor to implement the method as described in the first aspect.

In a fifth aspect, embodiments of the present invention provide an autonomous driving system, including:
an image collecting device to collect an initial observation image;
a device for adjusting a field of observation, to execute the method as described in the first aspect;
an autonomous driving control device for controlling the mobile device to drive automatically according to the target field of view.

In a sixth aspect, embodiments of the present invention provide a mobile device, including:
a mobile device main body;
the autonomous driving system as described in the fifth aspect.

In the technical solutions provided in the embodiments of the present invention, the initial observation image includes all objects that can be observed currently, and the field of view image is obtained by cropping the initial observation image with the field of view; by combining the image under the current field of view with the motion information of the mobile device, determining and adjusting the field of view in time can be realized based on the actual motion situation of the mobile device and the current observation result; in this way, the dynamic adjustment of the target field of view is realized, which can reduce the sacrifice of the field of view in the observation process, thereby reducing the safety risk caused by the sacrifice of the field of view, and to a certain extent, solving the safety problem existing in the process of the current target observation. Moreover, compared with the implementation solution of maintaining a relatively wide field of view while identifying distant target objects, the solution of dynamically adjusting the field of view as provided in the embodiments of the present invention has lower requirements on the hardware and software of the autonomous driving system, is more conducive to wide application of actual products, and to a certain extent, solves the problem of limited application existing in the available process of target observation.

### BRIEF DESCRIPTION OF THE DRAWINGS

FIG. 1 is a schematic flow diagram of a method for adjusting a field of observation as provided in an embodiment of the present invention;
FIG. 2 is a schematic flow diagram of a method for adjusting a field of observation as provided in an embodiment of the present invention;
FIG. 3 is a schematic flow diagram of a method for adjusting a field of observation as provided in an embodiment of the present invention;
FIG. 4 is a schematic flow diagram of a method for adjusting a field of observation as provided in an embodiment of the present invention;
FIG. 5 is a schematic flow diagram of a method for adjusting a field of observation as provided in an embodiment of the present invention;
FIG. 6 is a functional block diagram of a device for adjusting a field of observation as provided in an embodiment of the present invention;
FIG. 7 is a schematic physical structure diagram of a device for adjusting a field of observation as provided in an embodiment of the present invention;
FIG. 8 is a schematic architectural diagram of a system for adjusting a field of observation as provided in an embodiment of the present invention;
FIG. 9 is a schematic architectural diagram of an autonomous driving system provided in an embodiment of the present invention;
FIG. 10 is a schematic architectural diagram of a mobile device provided in an embodiment of the present invention.

### DETAILED DESCRIPTION

The exemplary embodiments will be described in detail herein, and the examples thereof are shown in the drawings. When the description below involves the drawings, the same numbers in different drawings represent the same or similar elements, unless otherwise indicated. The manners of implementation described in the following exemplary embodiments do not represent all manners of implementation that are consistent with the present disclosure. On the contrary, they are only examples of devices and methods that are consistent with some aspects as elaborated in the appended claims and described in the present disclosure.

The mobile device of the present invention may be a vehicle, a ship, or an unmanned flight vehicle. The specific application scenario of the present embodiments is a target detection scenario in the process of driving or parking a vehicle, and further, it may specifically be a target detection scenario where an unmanned vehicle is traveling or avoiding an obstacle.

Target detection technology is an important technology for an autonomous driving system and an unmanned aerial vehicle system to sense their external environments. In the real world, the farther an object is from a camera, the smaller its image(s). However, the pixel size of an object that can be detected by the target detection technology based on visual images tends to be limited, that is, its visible distance is limited. To have the capability of seeing farther, i.e., to realize the observation of a distant target, a common method is to increase the complexity of a detection algorithm model, or to reduce the field of view of a lens without changing the image resolution. However, the method of increasing the complexity of the detection algorithm model will increase the computation burden and complexity of the algorithm, which has relatively high requirements on software and hardware apparatuses, and thus cannot meet the real-time requirement of target detection, resulting in its limited applications. The solution of reducing the field of view of the lens results in the sacrifice of a part of field of view, so that an obstacle in the sacrificed part cannot be detected during the driving process of the mobile device, which results in a great safety risk.

The technical solutions provided by the present invention aim to solve the above technical problems in the existing technology, and propose an approach as follows: providing a target detection solution of dynamically switching fields of view, specifically, based on the motion information of the mobile device and the detection result of the current field of view, confirming and automatically adjusting an image field of view, so as to achieve adaptive switching of the image field of view.

The technical solutions of the present invention, as well as how the technical solutions of the embodiments of the present invention solve the above technical problems, will be described below in detail through certain specific embodiments. The following specific embodiments may be combined with each other, and the same or similar concepts or processes may not be repeated in some embodiments. The embodiments of the present invention will be described below in combination with the accompanying drawings.

### Embodiment 1

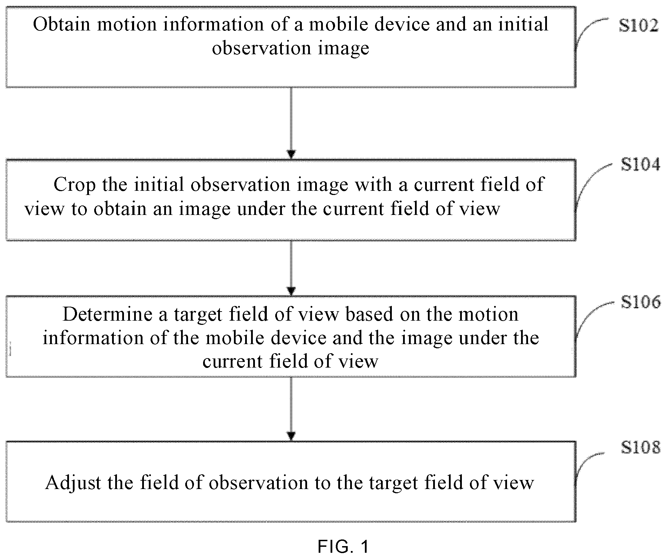

An embodiment of the present invention provides a method for adjusting a field of observation, which may be specifically used for an autonomous driving system of a vehicle. Specifically, referring to FIG. 1, the method includes the following steps:
S102, obtain motion information of the mobile device and an initial observation image.

On the one hand, the motion information of the mobile device is used to describe the motion situation of the mobile device; during the specific implementation, it may include, but is not limited to, traveling speed of the mobile device and acceleration of the mobile device.

When specifically obtaining the motion information of the mobile device, an executive body of the method for adjusting a field of observation (for the convenience of description, hereinafter referred to as a device for adjusting a field of observation) may be integrated with a speed measuring device to directly obtain the motion information of the mobile device; alternatively, the motion information collected by a mobile device controller may be obtained through an interaction with the mobile device controller, such as a main controller or a controller for driving control.

On the other hand, the initial observation image may include a full image that can be collected by a current image collecting apparatus of the mobile device, and the image may actually be used as a full field of view image.

For the specific implementation of the present solution, the image collecting device for collecting the initial observation image may be implemented by an existing hardware apparatus. More specifically, the image collecting device may be implemented by a hardware apparatus that has a relatively high resolution, so that it can still have a certain resolution in subsequent different fields of view.

In a possible design, the image collecting device may have an imaging field of view of 120 DFOV (display field of view), and/or, in a possible design, the image collecting device may have an imaging size of 3840*2160.

S104: crop the initial observation image with a current field of view to obtain an image under the current field of view.

In the embodiments of the present invention, a plurality of different fields of view are designed, and any field of view corresponds to a unique angle of view (hereinafter, field of vision (FOV)); in other words, the FOVs of any two fields of view are also different.

An observation image is obtained by cropping the initial observation image with the field of view, that is, cropping the initial observation image with the FOV that corresponds to the field of view. Therefore, the field of view images obtained by cropping the initial observation image with a plurality of different fields of view are also different.

In a specific implementation process, several levels of field of view may also be designed on this basis, and a corresponding relationship between the levels of field of view and the FOVs may be established, so that one level of field of view corresponds to a unique FOV, and to a unique field of view, and a unique field of view image. Specifically, a corresponding relationship in which the level of field of view gradually increases with the decrease of the FOV may be established; alternatively, a corresponding relationship in which the level of field of view decreases with the decrease of the FOV (or increases with the increase of the FOV) may also be established.

The design of the level of field of view enables the subsequent adjustment of a target level of field of view to be mapped to the adjustment of the level of field of view that has a preset FOV value; the manner of implementation is more convenient, and can help to improve the timeliness of the observation adjustment solution, and meets the requirement of various functions or solutions on the observation timeliness in the traveling process of the mobile device.

S106: determine a target field of view based on the motion information of the mobile device and the image under the current field of view.

Specifically, a first field of view that can correspond to the motion information of the mobile device may be obtained based on the motion information of the mobile device; regarding the image under the current field of view, an object detection result of the image under the current field of view may be obtained to facilitate determining the target field of view based on the first field of view and the object detection result.

The first field of view may be specifically used to describe a minimum field of view that can correspond to the motion information of the mobile device. Of course, in a specific application scenario, it may be embodied as the minimum field of view. In a possible design, if a corresponding relationship in which the level of field of view gradually increases with the decrease of the FOV is preset, a maximum level that corresponds to the motion information of the mobile device may be obtained; on the contrary, if a corresponding relationship in which the level of field of view gradually decreases with the decrease of the FOV is preset, a minimum level that corresponds to the motion information of the mobile device may be obtained.

The object detection result of any image may be used to detect whether an image includes an object, whether it includes an object of interest, as well as the size of the object of interest.

Which object is an object of interest may be preset, and the number and type of the object of interest may be at least one; the embodiments of the present invention do not impose particular limitations on these. In a specific scenario of unmanned driving, taking a vehicle as an example, the object of interest may be a vehicle ahead or an obstacle in the lane.

The size of the object of interest may be specifically represented by a dimension of an area where the object of interest is located in the image. In a possible design, if the area where the object of interest is located is framed in a rectangular box, the dimension of the area where the object of interest is located may be specifically represented by the width (or other data that may be used to characterize the dimension of the rectangular box, such as length, diagonal length, etc.) of the rectangular box. In another possible design, if the area where the object of interest is located is framed in a circular box, the dimension of the area where the object of interest is located may be specifically represented by the diameter (or radius) of the circular box.

In other words, the object detection result of the image under the current field of view obtained in this step may include, but is not limited to, whether the image under the current field of view includes an object of interest and a dimension of an area where the object of interest is located.

In addition, it should be noted that, in the embodiments of the present invention, the object detection result of the image under the current field of view obtained herein may be implemented by means of an executive body of the method for adjusting a field of observation (for the convenience of description, hereinafter referred to as a device for adjusting a field of observation) provided in the embodiments of the present invention executes the object detection; alternatively, an interaction with another object detecting device may be employed to obtain a detection results of that object detecting device on the image under the current field of view, where the interaction may include: obtaining actively or receiving passively.

S108: adjust the field of observation to the target field of view.

Specifically, in other words, the field of view is adjusted from the current FOV to a FOV that corresponds to the target field of view, and the adjusted FOV is used to execute the subsequent observation or other processing.

In a possible design, if a corresponding relationship between the level of field of view and the FOV is established beforehand, then during the execution of the step, the field of observation may be adjusted from the current level of field of view to the target level of field of view corresponding to the target field of view.

More specifically, during the execution of this step, the field of observation may be gradually adjusted from the current field of view to the target field of view; alternatively, the field of observation may be switched from the current field of view to the target field of view.

Through the above solution, the dynamic adjustment of the target field of view is realized, which can reduce the sacrifice of the field of view in an observation process, thereby reducing the safety risk caused by the sacrifice of the field of view, and to a certain extent, solving the safety problem existing in the process of the current target observation. Moreover, compared with the implementation solution of maintaining a relatively wide field of view while identifying distant target objects, the solution of dynamically adjusting the field of view as provided in the embodiments of the present invention has lower requirements on the hardware and software of the automatic driving system, is more conducive to wide applications of actual products, and to a certain extent, solves the problem of limited applications existing in the process of the current target observation.

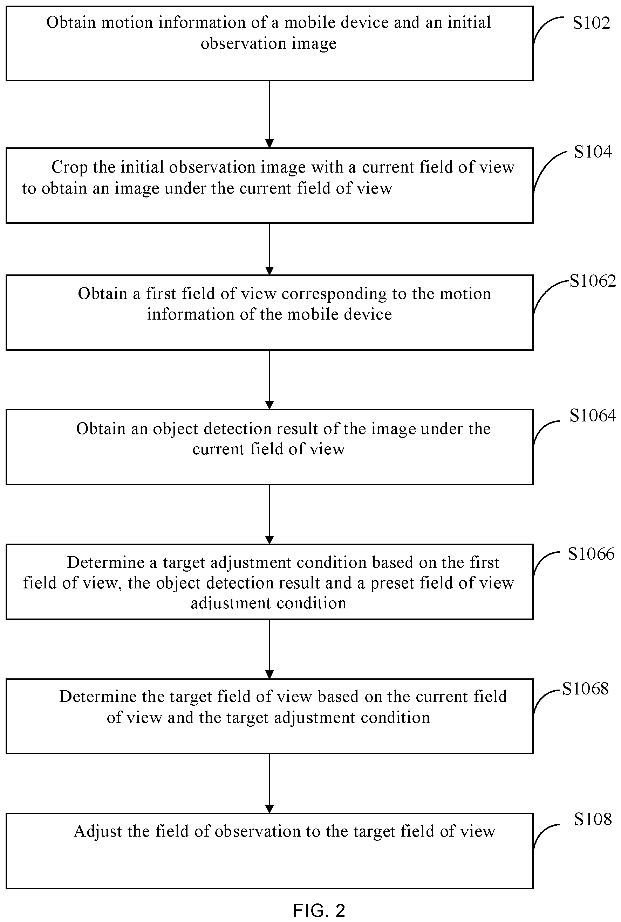

The specific manner of implementation of step S106 in the above solution will be further described below. Specifically, reference may be made to the implementation flow shown in FIG. 2:
S1062: obtain a first field of view that corresponds to the motion information of the mobile device.

One of the most important safety indicators during the driving of an autonomous driving vehicle is the collision time of the nearest object on a front view road. In the traveling process of a vehicle, in the case of a constant vehicle speed, an average braking distance corresponding to the vehicle speed may be obtained. The farthest object that can be detected by the target detection algorithm has only a limited number of pixels on an image. For imaging systems with the same resolution, the number of imaging pixels of an object in an image is positively correlated with the field of view (FOV, or level of field of view). Therefore, the first field of view may be obtained by converting the minimum dimension of the area where the farthest target needs to be observed is located from that distance into the minimum FOV.

In addition to the real-time execution of the above flow, in another manner of implementation, a corresponding relationship between various fields of view (or levels of field of view) and motion information ranges (such as vehicle speed ranges) of the mobile device may be established beforehand on the basis of the above algorithm; therefore, during the execution of this step, it is only necessary to determine which motion information range the motion information of the mobile device falls within, and then the field of view corresponding to this motion information range may be determined as the first field of view. Since this manner of implementation establishes a corresponding relationship beforehand, compared with the real-time processing solution, it greatly reduces the data volume and processing steps, is more conducive to improving the real-time performance of data processing, and beneficial to meeting the requirement for timeliness in the observation process.

S1064: obtain an object detection result of the image under the current field of view.

In a manner of implementation, the object detection of the image under the current field of view may be performed for all objects; in this case, when it is determined that an object(s) is included, it is necessary to further identify whether the object(s) includes an object of interest, as well as the dimension of the area where the object of interest is located. The process of identifying whether the object(s) is an object of interest may be carried out by using such technology as image recognition; alternatively, it may also be output to a user terminal, the operation information of the user terminal may be used; further, an object indicated by the operation information is taken as the object of interest.

In another manner of implementation, the object detection of the image under the current field of view may be performed only for the object of interest; in this case, the obtained object detection result may include, but is not limited to, whether the image under the current field of view includes an object of interest, and the dimension of the area where the object of interest is located. In other words, the object detection is directly realized based on a preset object of interest, without secondary recognition after the detection is completed, which is more conducive to reducing the processing steps and improving the timeliness of the processing.

In addition, apart from the above detection content, the object detection result may also include at least one of: position of an object in an image, object category, or category confidence.

S1066: determine a target adjustment condition based on the first field of view, the object detection result, and a preset field of view adjustment condition.

The purpose of this step is to compare the preset field of view adjustment condition with the first field of view and the object detection result so as to determine the field of view adjustment condition that can be met by the first field of view and the object detection result, thereby determining a target adjustment condition on this basis.

The field of view adjustment condition involved in the embodiments of the present invention may include: condition of expanding the field of view, condition of reducing the field of view, and condition of retaining the field of view. The condition of expanding the field of view refers to a condition for expanding the FOV, the condition of reducing the field of view refers to a condition for reducing the FOV, and the condition of retaining the field of view refers to a condition for retaining the FOV.

In a possible design, if a corresponding relationship in which the level of field of view gradually increases with the decrease of the FOV is established beforehand, then the condition of expanding the field of view is also a level decrease condition, the condition of reducing the field of view is also a level increase condition, and the condition of retaining the field of view is also a level retention condition. On the contrary, in another design, if a corresponding relationship in which the level of field of view gradually decreases with the decrease of the FOV is established beforehand, then the condition of expanding the field of view is also the level increase condition, the condition of reducing the field of view is also the level decrease condition, and the condition of retaining the field of view is also the level retention condition.

During the determination of the target adjustment condition, the step may specifically include two sub-steps:
first, determine a field of view adjustment condition that can be currently met based on the image under the current field of view and the first field of view;
then, determine the target adjustment condition based on the field of view adjustment condition that can be currently met.

Specifically, the embodiments of the present invention further provide the specific manners of implementation of the above field of view adjustment conditions, see Table 1.

**Table 1**

| | Condition of expanding the field of view | | Condition of reducing the field of view | | Condition of retaining the field of view | | |
|---|---|---|---|---|---|---|---|
| | 1.1 | 1.2 | 2.1 | 2.2 | 3.1 | 3.2 | 3.3 |
| Relationship between the current field of view and the first field of view | smaller than | larger than | larger than | larger than | equal to | larger than or equal to | equal to |
| Whether an object of interest is detected in the current field of view | - | yes | no | yes | no | yes | yes |
| Relationship between the dimension of the area where the largest object of interest is located and the preset safety dimension | - | - | - | smaller than | - | larger than | equal to |
| Relationship between a dimension of a projection of an area where the largest object of | - | larger than | - | - | - | smaller than | - |
| interest is located, in a designated field of view and a preset safety dimension | | | | | | | |

It should be noted that Table 1 involves the relationship between A and B, which is identified by "larger than", "smaller than", "equal to", etc.; specifically, taking the relationship of "larger than" as an example, it denotes that A is larger than B; other manners of identifying the relationships in size are similar thereto, and will not be repeated later. Also, "-" in Table 1 is used to denote no need to make judgment or no influence of the judgment result on the field of view adjustment result.

The dimension of a projection of an area where the largest object of interest is located in a designated field of view refers to the dimension of the largest object of interest in a designated field of view image when the largest object of interest is projected to the designated field of view image that is obtained by processing the initial observation image.

The designated field of view involved in the embodiments of the present invention refers to a field of view larger than the current field of view. Taking for example the above pre-established corresponding relationship in which the level of field of view gradually increases with the decrease of the FOV, it may be a level of field of view one (or more) level lower than the current level of field of view; alternatively, in the case of the corresponding relationship in which the level of field of view gradually increases with the increase of the FOV, it is a level of field of view one (or more) level higher than the current level of field of view.

The preset safety dimension is used to indicate the minimum safety distance in a traveling process of the mobile device; the minimum safety distance may be a preset fixed distance, and the preset safety dimension is a dimension of the projection of the minimum safe distance on the image under the current field of view.

Specifically, as shown in Table 1, the condition of expanding the field of view may include, but is not limited to, two situations as follows:
1.1) the current field of view is smaller than the first field of view.

In this case, the current field of view is too small to meet the requirement of the current motion information of the mobile device on the field of view; therefore, the field of view needs to be expanded to adapt to the motion situation of the mobile device.

1.2) The current field of view is larger than the first field of view, and an object of interest is detected in the image under the current field of view; moreover, in the designated field of view, a projection of an area where the largest object of interest is located has a dimension larger than the preset safety dimension, where the designated field of view is larger than the current field of view.

In this case, the current field of view can meet the minimum requirement of the motion of the mobile device on the FOV; however, the object of interest is relatively large; moreover, after the FOV is further increased, the dimension of the object of interest can still satisfy the preset safety dimension after it becomes smaller, and thus can still meet the requirement of obstacle analysis on the object of interest. Therefore, the FOV may be increased to meet the obstacle detection requirement.

Specifically, as shown in Table 1, the condition of reducing the field of view may include, but is not limited to, two situations as follows:
2.1) The current field of view is larger than the first field of view, and no object of interest is detected in the image under the current field of view.

In this case, the current FOV is relatively large and no obstacle is detected in the current FOV; accordingly, a higher priority should be given to obstacles near the mobile device. Therefore, the FOV may be appropriately reduced to meet the requirement of close observation.

2.2) The current field of view is larger than the first field of view, and an object of interest is detected in the image under the current field of view; moreover, an area where the largest object of interest is located has a dimension smaller than the preset safety dimension.

In this case, the corresponding dimension of the object of interest in the current FOV image is smaller than the preset safety dimension, which can meet the requirement of obstacle observation; in addition, the current FOV is relatively large, and there is still room for further reduction. Therefore, the FOV may be reduced to meet the requirement of distant observation of obstacles.

Specifically, as shown in Table 1, the condition of retaining the field of view may include, but is not limited to, three situations as follows:
3.1) The current field of view is equal to the first field of view, and no object of interest is detected in the image under the current field of view.

In this case, the current field of view corresponds to the minimum FOV that can correspond to the motion information of the mobile device; moreover, in this case, there is no object of interest within a long enough distance. Therefore, the current field of view needs to be retained without a need of adjusting the field of view.

3.2) The current field of view is larger than or equal to the first field of view, and an object of interest is detected in the image under the current field of view; moreover, an area where the largest object of interest is located has a dimension larger than the preset safety dimension, and in the designated field of view, a projection of an area where the largest object of interest is located has a dimension smaller than the preset safety dimension, where the designated field of view is larger than the current field of view.

In this case, it indicates that there is an object of interest near the mobile device; moreover, after the object of interest is processed with the current FOV, a dimension of the object of interest is larger than the preset safety dimension, but a further increase in the FOV may bring the object of interest down to a dimension that is not desirable for obstacle analysis. Therefore, the current field of view is suitable, it is not appropriate to make further adjustment thereto, and the current field of view needs to be retained.

3.3) The current field of view is larger than or equal to the first field of view, and an object of interest is detected in the current view image; moreover, an area where the largest object of interest is located has a dimension equal to the preset safety dimension.

In this case, the current field of view is larger than or equal to the minimum FOV that can correspond to the motion information of the mobile device, which indicates that the object of interest is far enough from the mobile device, yet an area where the detected largest object of interest is located has a dimension equal to the preset safety dimension, thus a further decrease in the FOV may no longer meet the minimum requirement of the motion of the mobile device on the FOV. Therefore, the field of view needs to be retained without further adjustment.

Based on the comparisons of the image under the current field of view and, the first level of field of view with the above field of view adjustment conditions, the field of view adjustment condition met by the current motion and observation situation may be determined. Specifically, the above comparisons may be made one by one according to the conditions as shown in Table 1, and the comparisons with various field of view adjustment conditions may be made on this basis, so as to determine the field of view adjustment condition that can be met; alternatively, the comparisons with the field of view adjustment conditions may be made one by one in a certain order; for example, the comparison with the condition of expanding the field of view may be made first; if it is met, then no further comparison needs to be made; on the contrary, if it is not met, then the comparison with the condition of reducing the field of view follows; the other field of view adjustment conditions may be further judged one by one.

During the determination of the target adjustment condition, the final target adjustment condition may be determined in one of at least two manners as follows:
A real-time processing solution, that is, a field of view adjustment condition that is met by the current field of view is obtained based on the first field of view and the object detection result, which is then used as the target adjustment condition. This adjustment solution is conducive to the real-time adjustment of the field of view, thereby ensuring that the adjusted field of view is truly in line with the motion state and observation state of the mobile device, and thus has relatively high observation accuracy and real-time performance.

Alternatively, a delayed processing solution, that is a field of view adjustment condition that is met by the current field of view is obtained based on the first field of view and the object detection result, and field of view adjustment conditions that are met by frames preceding the current frame by at least one frame; subsequently, statistics on how many times the field of view adjustment conditions are met are carried out; further, the proportion of the field of view adjustment condition that is met the most times, among the field of view adjustment conditions is obtained; next, if the proportion is larger than or equal to a preset proportion threshold, the field of view adjustment condition that is met the most times is determined as the target adjustment condition.

In this case, the proportion threshold may be customized according to actual needs; for example, it may be preset as 50%. During the specific implementation of the present solution, the above comparison and determination may be carried out with each frame, and how many times the field of view adjustment conditions are met is counted on the basis of the determined field of view adjustment condition. For example, if the condition of expanding the field of view is met, the condition of expanding the field of view is met for one more time, and it is the same case with the other field of view adjustment conditions. Thus, the preceding N-1 frame(s) (N is an integer greater than 1) including the current frame may be obtained for each frame; if the field of view adjustment condition that is met the most times has been met for sufficient times (greater than or equal to the preset proportion threshold) among the N frames, it will be determined as the target adjustment condition, and the subsequent adjustment is then performed.

Compared with the above real-time processing solution, this processing solution offers a buffer time in the process of observation adjustment, realizes the determination and subsequent switch of the FOVs through multi-frame observation and recognition, avoids such issues as resource occupation caused by excessively frequent adjustment, and has a higher accuracy.

S1068: determine the target field of view according to the current field of view and the target adjustment condition.

In this step, the target field of view may be determined according to a preset adjustment stepping.

In a possible implementation scenario, one (or more, not elaborated herein) level may be used as an adjustment stepping in a scenario where the corresponding relationship between the level of field of view and the FOV is preset as negative correlation; thus, if it is determined that the target adjustment condition is the condition of expanding the field of view, then one level is decreased on the basis of the current level of field of view corresponding to the current field of view to obtain the target level of field of view; alternatively, if the target adjustment condition is the condition of reducing the field of view, then one level is increased on the basis of the current level of field of view corresponding to the current field of view to obtain the target level of field of view; alternatively, if the target adjustment condition is the field of view retention condition, the current level of field of view corresponding to the current field of view is determined as the target level of field of view. As can be seen, in a scenario where the corresponding relationship between the level of field of view and the FOV is preset as positive correlation, this solution is also applicable, except that during the determination of the target level of field of view, the increase or decrease is inverse to the above situation, which will not be elaborated herein.

In another possible implementation scenario, as it may be directly compared with a preset angle, the FOV corresponding to the current field of view may be increased, decreased, or retained to obtain the target FOV.

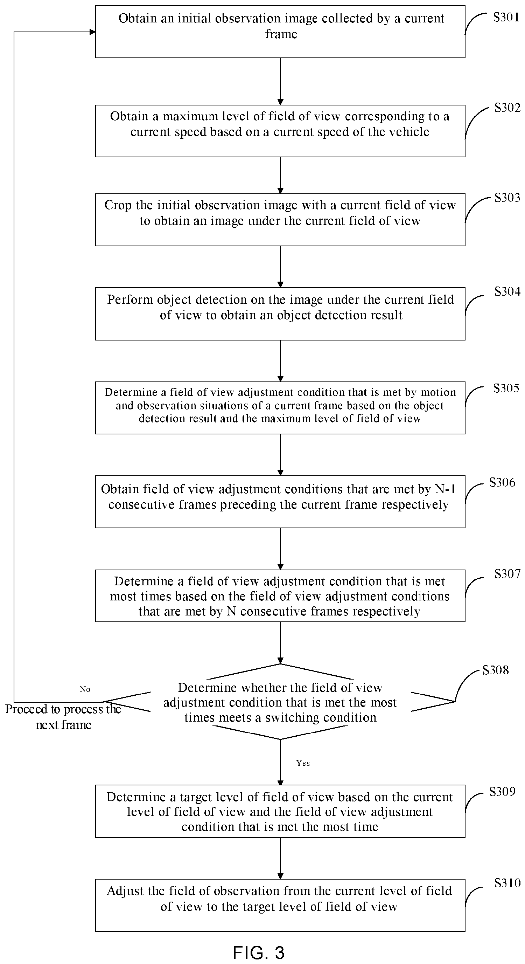

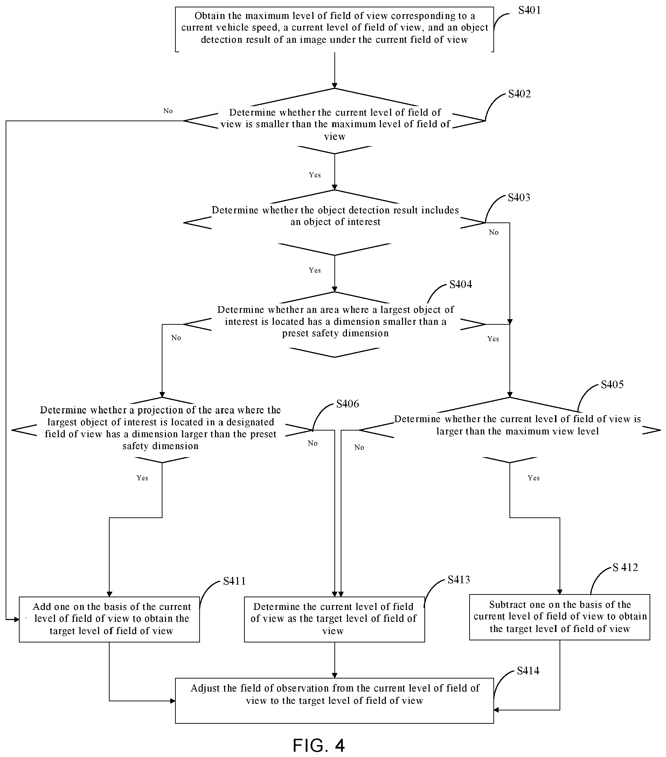

To facilitate understanding of the above solution, embodiments of the present invention provide two possible manners of implementation for the above design. See FIG. 3 and FIG. 4, FIG. 3 and FIG. 4 take for example a vehicle as the mobile device in the description.

FIG. 3 is a schematic flow diagram of a method for adjusting a field of observation as provided in an embodiment of the present invention. As shown in FIG. 3, the method includes:
S301: obtaining an initial observation image collected by a current frame.
S302: obtaining a maximum level of field of view corresponding to a current speed based on a current speed of the vehicle.

In other words, the current vehicle speed corresponds to the minimum FOV, i.e., the first field of view.

S303: cropping the initial observation image with a current field of view to obtain a image under the current field of view.

S304: performing object detection on the image under the current field of view to obtain an object detection result.

S305: determining a field of view adjustment condition that is met by motion and observation situations of a current frame based on the object detection result and the maximum level of field of view.

S306: obtaining field of view adjustment conditions that are met by N-1 consecutive frames preceding the current frame, respectively.

S307: determining a field of view adjustment condition that is met most times based on the field of view adjustment conditions that are met by N consecutive frames, respectively.

S308: determining whether the field of view adjustment condition that is met the most times meets a switching condition.

In other words, it is judged whether the proportion of the field of view adjustment condition that is met the most times among the field of view adjustment conditions is greater than or equal to a preset proportion threshold; if yes, it meets the switching condition, and S309 is executed; if not, it does not meet the switching condition; then, return to S301, and restart processing the next frame.

S309: determining a target level of field of view based on the current level of field of view and the field of view adjustment condition that is met the most time.

S310: adjusting the field of observation from the current level of field of view to the target level of field of view.

FIG. 4 is a schematic flow diagram of a method for adjusting a field of observation as provided in an embodiment of the present invention. In the scenario shown in FIG. 4, the corresponding relationship between the level of field of view and the FOV is preset as negative correlation. Specifically, as shown in FIG. 4, the method includes:
S401: obtaining the maximum level of field of view corresponding to a current vehicle speed, a current level of field of view, and an object detection result of a image under the current field of view.

The specific manner of implementation is as described above, and will not be repeated herein.

S402: determining whether the current level of field of view is smaller than the maximum level of field of view; if yes, executing S403; if not, executing S411.

S403: determining whether the object detection result includes an object of interest; if yes, executing S404; if not, executing S405.

S404: determining whether an area where a largest object of interest is located has a dimension smaller than a preset safety dimension; if yes, executing S405; if not, executing S406.

S405: determining whether the current level of field of view is larger than the maximum view level; if yes, executing S412; if not, executing S413.

S406: determining whether a projection of the area where the largest object of interest is located in a designated field of view has a dimension larger than the preset safety dimension; if yes, executing S411; if not, executing S413.

S411: adding one on the basis of the current level of field of view to obtain the target level of field of view.

In other words, if the condition of expanding the field of view is met and the FOV is reduced, the level is added by one.

S412: subtracting one on the basis of the current level of field of view to obtain the target level of field of view.

In other words, if the condition of expanding the field of view is met and the FOV is reduced, the level is subtracted by one.

S413: determining the current level of field of view as the target level of field of view.

S414: adjusting the field of observation from the current level of field of view to the target level of field of view.

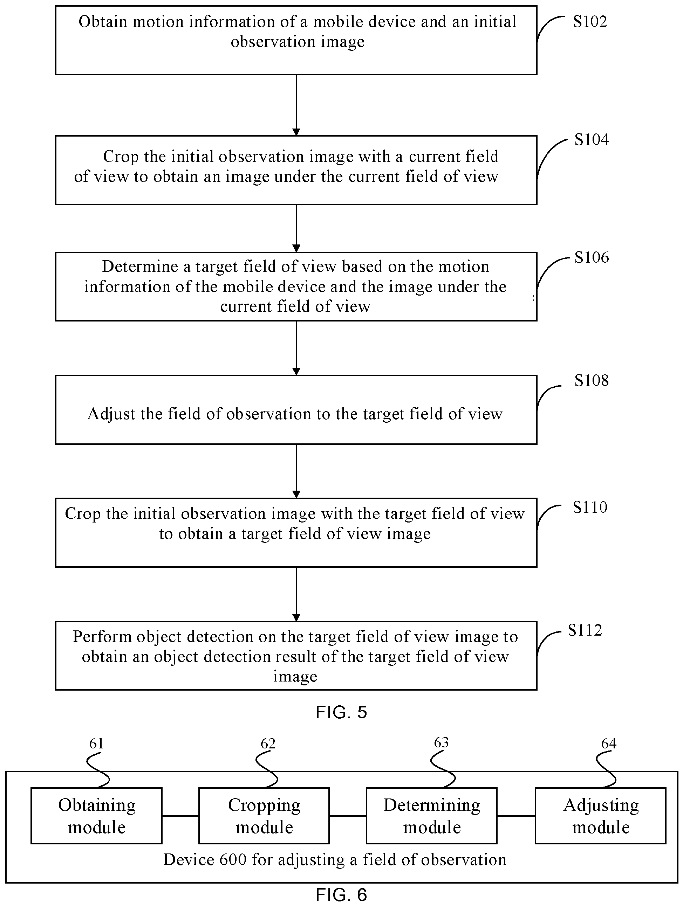

Through the above solution, the real-time adjustment of the field of observation may be realized. Based on the adjustment on the field of observation, the embodiments of the present invention further provide application scenarios of the above solution. Referring to the process shown in FIG. 5, the method may further include steps as follows:
S110: cropping the initial observation image with the target field of view to obtain a target field of view image.
S112: performing object detection on the target field of view image to obtain an object detection result of the target field of view image.

In other words, through the real-time adjustment on the field of observation, the target field of view of the next frame can be determined based on the current frame; further, the object detection can be performed on the next frame with a field of view that better meets the motion and observation requirements of the mobile device, which is conducive to improving the detection accuracy of obstacles in the traveling process of the mobile device, and also beneficial to improving the safety in the traveling process of the mobile device.

It can be understood that part or all of the steps or operations in the above embodiments are only exemplary, and the embodiments of the present invention may also execute other operations as well as variants of various operations. In addition, each step may be executed in a sequence different from that presented in the above embodiments, and not all the operations in the above embodiments need to be performed.

### Embodiment 2

Based on the method for adjusting a field of observation as provided in the above Embodiment 1, the embodiments of the present invention further provide a device embodiment that implements various steps and the method in the above method embodiment.

An embodiment of the present invention provides a device for adjusting a field of observation; referring to FIG. 6, the device 600 for adjusting a field of observation may include:
an obtaining module 61 for obtaining motion information of the mobile device and an initial observation image;
a cropping module 62 for cropping the initial observation image with a current field of view to obtain a image under the current field of view;
a determining module 63 for determining a target field of view based on the motion information of the mobile device and the image under the current field of view;
an adjusting module 64 for adjusting the field of observation to the target field of view.

In a possible design, the determining module 63 is specifically used for:
obtaining a maximum field of view that corresponds to the motion information of the mobile device to be a first field of view;
obtaining an object detection result of the image under the current field of view, the object detection result including: whether the image under the current field of view includes an object of interest, and a dimension of an area where the object of interest is located;
determining the target field of view according to the first field of view and the object detection result.

The determining module 63 is specifically used for:
determining a target adjustment condition according to the first field of view, the object detection result, and a preset field of view adjustment condition;
determining the target field of view according to the current field of view and the target adjustment condition.

The field of view adjustment condition involved in the embodiments of the present invention may include: a condition of expanding the field of view, a condition of reducing the field of view, and a condition of retaining the field of view.

The condition of expanding the field of view includes:
the current field of view being smaller than the first field of view;
   or,
the current field of view being larger than the first field of view, and an object of interest being detected in the image under the current field of view; moreover, in a designated field of view, a projection of an area where the largest object of interest is located having a dimension larger than a preset safety dimension; wherein, the designated field of view is larger than the current field of view.

The condition of reducing the field of view includes:
the current field of view being larger than the first field of view, and no object of interest being detected in the image under the current field of view;
   or,
the current field of view being larger than the first field of view, and an object of interest being detected in the current field of view image; moreover, an area where the largest object of interest is located having a dimension smaller than a preset safety dimension.
the condition of retaining the field of view includes:
   the current field of view being equal to the first field of view, and no object of interest being detected in the current field of view image;
      or,
   the current field of view being larger than or equal to the first field of view, and an object of interest being detected in the current field of view image; moreover, an area where the largest object of interest is located having a dimension larger than a preset safety dimension, and in a designated field of view, a projection of an area where the largest object of interest is located having a dimension smaller than a preset safety dimension; wherein the designated field of view is larger than the current field of view;
      or,
   the current field of view being larger than or equal to the first field of view, and an object of interest being detected in the current view image; moreover, an area where the largest object of interest is located having a dimension smaller than or equal to a preset safety dimension.

Based on the above design, in a possible manner of implementation, the determining module 63 is specifically used for:
obtaining a field of view adjustment condition that is met by the current field of view, based on the first field of view and the object detection result to be the target adjustment condition.

In another possible manner of implementation, the determining module 63 is specifically used for:
obtaining a field of view adjustment condition that is met by the current field of view, based on the first field of view and the object detection result;
obtaining field of view adjustment conditions that are met by at least one frame preceding a current frame;
counting how many times the field of view adjustment conditions each are met;
obtaining a proportion of a field of view adjustment condition that is met most times among the field of view adjustment conditions;
determining the field of view adjustment condition that is met the most times as the target adjustment condition if the proportion is larger than or equal to a preset proportion threshold.

In another possible design, the adjusting module 64 is specifically used for:
gradually adjusting the field of observation from the current field of view to the target field of view, or,
switching the field of observation from the current field of view to the target field of view.

The motion information of the mobile device involved in the embodiments of the present invention includes: traveling speed of the mobile device and acceleration of the mobile device.

In the embodiments of the present invention, any field of view corresponds to a unique field of vision (FOV).

In addition, in the embodiments of the present invention, the cropping module 62 is further used for cropping the initial observation image with the target field of view to obtain a target field of view image;
a detecting module (not shown in FIG. 6) is further used for performing object detection on the target field of view image to obtain an object detection result of the target field of view image.

A device 600 for adjusting a field of observation in the embodiment as shown in FIG. 6 may be used to implement the technical solution of the above method embodiment; regarding the implementation principles and technical effects thereof, reference may be further made to the relevant description in the method embodiment; optionally, the device 600 for adjusting a field of observation may be a processor in a mobile device, a cloud server, or terminal apparatus.

It should be understood that the division of various modules of the device 600 for adjusting a field of observation as shown in FIG. 6 is only division of logical functions, and may be entirely or partially integrated into a physical entity in actual implementation, or may be physically separated. Moreover, these modules may all be implemented in the form of software called by processing elements; they may also all be implemented in the form of hardware; also, some modules may be implemented in the form of software called by the processing elements, and the other modules may be implemented in the form of hardware. For example, the adjusting module 64 may be a processing element that is disposed separately, and it may also be integrated in the device 600 for adjusting a field of observation; for example, it is implemented in a certain chip of a terminal; in addition, it may also be stored in the form of a program in a memory of the device 600 for adjusting a field of observation, called by a certain processing element of the device 600 for adjusting the field of observation, and executes the functions of the above modules. The implementation of the other modules is similar. In addition, all or part of these modules may be integrated together or implemented independently. The processing element described herein may be an integrated circuit with signal processing capability. In the implementation process, each step of the above method or each module mentioned above may be completed by an integrated logic circuit of hardware in a processor element or by instructions in the form of software.

For example, the above modules may be one or more integrated circuits configured to implement the above methods, such as one or more application specific integrated circuits (ASICs), one or more microprocessors (digital signal processors, DSPs), or one or more field programmable gate arrays (FPGAs), etc. Another example, when one of the above modules is implemented in the form of a scheduler of a processing element, the processing element may be a general-purpose processor, such as a central processing unit (CPU) or another processor that may call a program. Yet another example, these modules may be integrated together and implemented in the form of a system-on-a-chip (SOC).

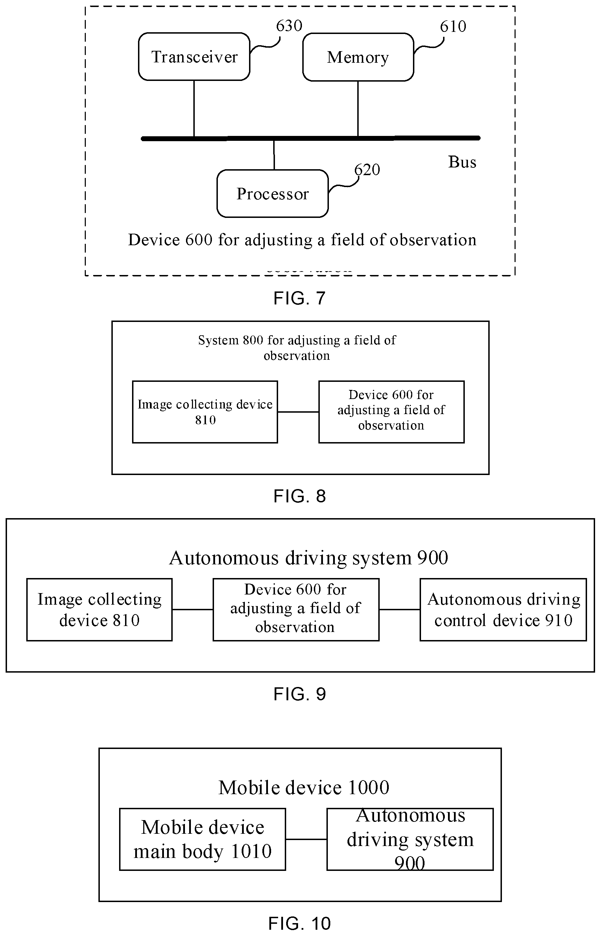

In addition, an embodiment of the present invention provides a device for adjusting a field of observation; referring to FIG. 7, the device 600 for adjusting a field of observation includes:
a memory 610;
a processor 620; and
a computer program;
where the computer program is stored in the memory 610 and is configured to be executed by the processor 620 to implement the method described in any manner of implementation in the above embodiments.

There may be one or more processors 620 in the device 600 for adjusting a field of observation, and the processor(s) 620 may also be referred to as processing unit(s), which may implement a certain control function. The processor(s) 620 may be a general-purpose processor or a dedicated processor. In an optional design, the processor(s) 620 may also store instructions that may be run by the processor(s) 620 so that the device 600 for adjusting a field of observation executes the method described in the above method embodiments.

In another possible design, the device 600 for adjusting a field of observation may include a circuit that may implement the function of transmission, reception, or communication in the above method embodiments.

Optionally, there may be one or more memories 610 in the device 600 for adjusting a field of observation; instructions or intermediate data are stored in the memories 610, and the instructions may be executed on the processor 620 so that the device 600 for adjusting a field of observation executes the methods described in the above method embodiments. Optionally, other relevant data may also be stored in the memory 610. Optionally, the processor 620 may also store instructions and/or data. The processor 620 and the memory 610 may be arranged separately or integrated together.

In addition, as shown in FIG. 7, a transceiver 630 may also be provided in the device 600 for adjusting a field of observation, where the transceiver 630 may be referred to as a transmit-receive unit, a transmit-receive device, a transmit-receive circuit, or a transceiver, etc., for data transmission or communication with a test apparatus or other terminal apparatuses, which will not be repeated herein.

As shown in FIG. 7, the memory 610, the processor 620, and the transceiver 630 are connected, and communicate via a bus.

If the device 600 for adjusting a field of observation is used for implementing the method corresponding to the method in FIG. 2, for example, the transceiver 630 may release a test package body to each test terminal, and the transceiver 630 may further receive test operation data that are fed back from each test terminal. The processor 620 may complete a corresponding determination or control operation; optionally, corresponding instructions may also be stored in the memory 610. For the specific processing manner of each component, reference may be made to the relevant descriptions of the above embodiments.

In addition, an embodiment of the present invention provides a readable storage medium, on which a computer program is stored, and the computer program may be executed by a processor to implement the method as described in any manner of implementation in Embodiment 1.

Also, an embodiment of the present invention provides a system 800 for adjusting a field of observation; referring to FIG. 8, the system 800 for adjusting a field of observation includes:
an image collecting device 810 for collecting an initial observation image;
a device 600 for adjusting a field of observation, which is used for executing the method as described in any manner of implementation in the Embodiment 1.

In addition, an embodiment of the present invention provides an autonomous driving system; referring to FIG. 9, the autonomous driving system 900 includes:
an image collecting device 810 for collecting an initial observation image;
a device 600 for adjusting a field of observation, which is used for executing the method as described in any manner of implementation in the Embodiment 1;
an autonomous driving control device 910 for controlling the mobile device to run automatically based on the target field of view.

In addition, an embodiment of the present invention provides a mobile device; referring to FIG. 10, the mobile device 1000 includes:
a mobile device main body 1010;
an autonomous driving system 900.

Since each module in the present embodiment can execute the method as shown in Embodiment 1, for parts that are not described in detail in this embodiment, reference may be made to the relevant descriptions of Embodiment 1.

In addition, it should be noted that when used in the embodiments of the present invention, although the terms "first," "second," among others may be used in the embodiments of the present invention to describe various elements, these elements should not be limited by these terms. These terms are only used to distinguish one element from another element. For example, without changing the meaning of the description, a first element may be referred to as a second element; likewise, the second element may be referred to as the first element, as long as all the "first elements" that appear are renamed consistently and all the "second elements" that appear are renamed consistently. The first element and the second element are both elements, but they may not be the same element.

The terms used in the embodiments of the present invention are only used to describe the embodiments, and are not used to limit the claims. As used in the description of the embodiments and claims, the singular forms "a," "an," and "the" are intended to also include a plural form(s), unless clearly expressed in the context. Similarly, the term "and/or" as used in the embodiments of the present invention refers to any and all possible combinations of one or more associated contents in the list. In addition, when used in the embodiments of the present invention, the term "comprise" and its variants "comprises" and/or "comprising" refer to the existence of stated features, entireties, steps, operations, elements, and/or components, but do not exclude the existence or addition of one or more other features, entireties, steps, operations, elements, components, and/or groups thereof.

For the above technical description, reference may be made to the drawings, which form a part of the embodiments of the present invention; moreover, through description, the drawings show the manners of implementation of the embodiments in accordance with the description. Although these embodiments are described in such a detailed manner as to enable those skilled in the art to implement these embodiments, these embodiments are non-limiting; thus, other embodiments may be used, and changes may be made without departing from the scope of the described embodiments. For example, the operation sequence described in the flow chart is non-limiting; thus, the illustrations in the flow chart and the sequence of two or more operations described in the flow chart may be changed according to several embodiments. As another example, in several embodiments, the illustrations in the flow chart and one or more operations described in the flow chart are optional or removable. In addition, certain steps or functions may be added to the disclosed embodiments, or more than two steps have their sequence interchanged. All these changes are deemed to fall within the disclosed embodiments and claims.

In addition, terms are used in the above technical description to provide a thorough understanding of the described embodiments. However, excessive details are not needed to implement the described embodiments. Therefore, the above description of the embodiments is presented for explanation and description. The embodiments presented in the above description and the examples disclosed according to these embodiments are provided separately to add context and facilitate understanding the described embodiments. The above description is not intended to be exhaustive or to confine the described embodiments to precise forms of the embodiments of the present invention. Based on the above teachings, several modifications, selective applications, and changes are feasible. In some cases, well-known processing steps are not described in detail to avoid unnecessary influence on the described embodiments.

Finally, it should be noted that the above embodiments are only used to illustrate the technical solutions of the present invention, not to limit them. Although the present invention is described in detail with reference to the above embodiments, those skilled in the art should understand: they may still modify the technical solutions described in the above embodiments, or conduct equivalent substitution for some or all of the technical features therein; these modifications or substitutions do not deviate the essence of the corresponding technical solutions from the scope of the technical solutions of the embodiments of the present invention.

## Claims

1. A method for adjusting a field of observation, **characterized in that**, the method is used for an autonomous driving system of a mobile device, and comprises:
obtaining motion information of the mobile device and an initial observation image;
cropping the initial observation image with a current field of view to obtain an image under current field of view;
determining a target field of view based on the motion information of the mobile device and the image under the current field of view;
adjusting the field of observation to the target field of view.

2. The method according to claim 1, **characterized in that** the determining of the target field of view based on the motion information of the mobile device and the image under the current field of view includes:
obtaining a first field of view that corresponds to the motion information of the mobile device;
obtaining an object detection result of the image under the current field of view, the object detection result including: whether the image under the current field of view includes an object of interest, and a dimension of an area where the object of interest is located;
determining the target field of view based on the first field of view and the object detection result.

3. The method according to claim 2, **characterized in that** the determining of the target field of view based on the first field of view and the object detection result includes:
determining a target adjustment condition based on the first field of view, the object detection result, and a preset field of view adjustment condition;
determining the target field of view based on the current field of view and the target adjustment condition.

4. The method according to claim 3, **characterized in that** the field of view adjustment condition includes: a condition of expanding the field of view, a condition of reducing the field of view, and a condition of retaining the field of view.

5. The method according to claim 4, **characterized in that** the condition of expanding the field of view includes:
the current field of view being smaller than the first field of view;
or,
the current field of view being larger than the first field of view, and the object of interest being detected in the image under the current field of view; and, in a designated field of view, a projection of an area where a largest object of interest is located having a dimension larger than a preset safety dimension, wherein, the designated field of view is larger than the current field of view.

6. The method according to claim 4, **characterized in that** the condition of reducing the field of view includes:
the current field of view being larger than the first field of view, and no object of interest being detected in the image under the current field of view;
or,
the current field of view being larger than the first field of view, and the object of interest being detected in the image under the current field of view; and an area where a largest object of interest is located having a dimension smaller than a preset safety dimension.

7. The method according to claim 4, **characterized in that** the condition of retaining the field of view includes:
the current field of view being equal to the first field of view, and no object of interest being detected in the image under the current field of view;
or,
the current field of view being larger than or equal to the first field of view, and the object of interest being detected in the image under the current field of view; and, an area where a largest object of interest is located having a dimension larger than a preset safety dimension, and in a designated field of view, a projection of an area where the largest object of interest is located having a dimension smaller than a preset safety dimension, wherein the designated field of view is larger than the current field of view;
or,
the current field of view being larger than or equal to the first field of view, and the object of interest being detected in the image under the current field of view; moreover, an area where a largest object of interest is located having a dimension smaller than or equal to a preset safety dimension.

8. The method according to any one of claims 3-7, **characterized in that** the determining of the target adjustment condition based on the first field of view, the object detection result and the preset field of view adjustment condition includes:
obtaining a field of view adjustment condition, which is met by the current field of view based on the first field of view and the object detection result, as the target adjustment condition.

9. The method according to any one of claims 3-7, **characterized in that** the determining of the target adjustment condition based on the first field of view, the object detection result and the preset field of view adjustment condition includes:
obtaining a field of view adjustment condition that is met by the current field of view based on the first field of view and the object detection result;
obtaining field of view adjustment conditions that are met by at least one frame preceding a current frame;
counting the number of times that each field of view adjustment condition is met;
obtaining a proportion of a field of view adjustment condition that is met most times among the field of view adjustment conditions;
determining the field of view adjustment condition that is met the most times as the target adjustment condition if the proportion is larger than or equal to a preset proportion threshold.

10. The method according to any one of claims 1-7, **characterized in that** the adjusting of the field of observation to the target field of view includes:
gradually adjusting the field of observation from the current field of view to the target field of view, or,
switching the field of observation from the current field of view to the target field of view.

11. The method according to any one of claims 1-7, **characterized in that** the motion information of the mobile device includes: a traveling speed of the mobile device and an acceleration of the mobile device.

12. The method according to any one of claims 1-7, **characterized in that** each field of view corresponds to a unique field of vision (FOV).

13. The method according to any one of claims 1-7, **characterized in that** the method further includes:
cropping the initial observation image with the target field of view to obtain a target field of view image;
performing object detection on the target field of view image to obtain an object detection result of the target field of view image.

14. A device for adjusting a field of observation, **characterized in that** the device is used for an autonomous driving system of a mobile device, and comprises:
a memory to store a computer program;
a processor;
wherein the computer program is stored in the memory and configured to be executed by the processor to implement the method according to any one of claims 1-13.

15. A system for adjusting a field of observation, **characterized by** comprising:
an image collecting device to collect an initial observation image;
a device for adjusting a field of observation, to execute the method according to any one of claims 1-13.

16. The system according to claim 15, **characterized in that** the image collecting device has an imaging field of view of 120DFOV.

17. A computer-readable storage medium, **characterized in that** a computer program is stored on the computer-readable storage medium,
the computer program is executed by a processor to implement the method according to any one of claims 1-13.

18. An autonomous driving system, **characterized by** comprising:
an image collecting device to collect an initial observation image;
a device for adjusting a field of observation to execute the method according to any one of claims 1-13;
an autonomous driving control device to control the mobile device to drive automatically based on the target field of view.

19. A mobile device, **characterized by** comprising:
a mobile device main body; and
the autonomous driving system according to claim 18.

20. The mobile device according to claim 19, the mobile device comprising at least one of a vehicle, a ship, or an unmanned flight vehicle.
